# EUROPEAN PATENT SPECIFICATION

(11) **EP 2 178 654 B1**
(45) Date of publication and mention of the grant of the patent: **09.01.2019**
(21) Application number: 08828458.3
(22) Date of filing: 18.08.2008
(51) Int. Cl.: B05D 7/16, B05D 1/06, C09D 5/03, C09D 167/06, B05D 3/10

(54) **PROCESS OF POWDER COATING ALUMINIUM SUBSTRATES**
VERFAHREN ZUR PULVERBESCHICHTUNG VON ALUMINIUMSUBSTRATEN
PROCESSUS DE REVÊTEMENT EN POUDRE DE SUBSTRATS D'ALUMINIUM

(30) Priority: 24.08.2007 EP 07381061
(43) Date of publication of application: 28.04.2010
(73) Proprietor: Coatings Foreign IP Co. LLC, Washington, DC 20004 (US)
(72) Inventor: RODRIGUEZ-SANTAMARTA, Carlos, E-08002 Barcelona (ES); REKOWSKI, Volker, D-45549 Sprockhoevel (DE); MARELLI, Ernesto, F-42600 Savigneux (FR)
(74) Representative: LKGLOBAL Lorenz & Kopf PartG mbB Patentanwälte
(86) International application number: PCT/US2008/073421
(87) International publication number: WO 2009/029432

(56) References cited:
- EP-A- 0 551 734
- WO-A-2007/075777
- US-A- 4 091 049
- US-A- 5 252 399
- US-A- 5 525 370
- US-A1- 2006 062 908

## Description

### Field of the Invention

The invention is directed to a process of powder coating aluminium substrate surfaces providing a special effect on the aluminium substrate surface for interior and exterior applications in architecture and industrial market.

### Description of Related Art

Materials based on aluminium are used more and more in the architecture market and for industrial and decorative applications.

Aluminium building parts or elements often need to be prepared by a special finishing of their surfaces to provide excellent special effects and protection, and therefore they are usually finished by the so-called "anodizing process". The anodizing process is an electrochemical process whereby the aluminium surface is changed into aluminium oxide. The resulted aluminium oxide is strongly bonded with the aluminium base, and it provides excellent hardness, corrosion- resistance, weather resistance and light fastness of the surface. It is possible to color the resulting oxide film using organic dyes, Although providing desired properties of aluminium surfaces the anodizing process needs to use strong acids and bases and, therefore, can cause harzards and waste disposal issues. Additionally the process can provide undesired monochrome parts on the metal surface and can lead to tensile failure due to surface cracks.

An alternative to the anodizing process is a coating using particularly powder coating compositions. Such powder compositions can provide specific metallic effects such as color shift, pearlescence, fluorescence, on the cured coating. Commonly metallic pigments are used to produce such coatings. WO 03/033172 discloses a two-part powder coating system providing a chromatic and metallic effect coloration whereby the first part powder system contains metallic and chromatic pigments and form a base coating, and whereby the second part powder system is free of chromatic pigments and form a clear coating.

The powder coating compositions providing such metallic effects can show a poor color match of the desired effect resulting by anodizing of aluminium, and they can show poor smoothness in combination with visible so-called "orange peel" effects. Moreover, the resulted coatings need to be protected with at least second layer of, e.g., a clear coat, and this is not appreciated due to productivity of the manufacture line.

US 4,091,049 A1 is directed to powder coating compositions containing glycidyl ester copolymers and a carboxyl terminated crosslinking agent and in particular discloses powder coating compositions comprising a correctable mixture of (A) a copolymer of between about 8 and about 30 weight percent of a glycidyl ester of a monoethylenically unsaturated acid and between about 92 and about 70 weight percent of other monoethylenically unsaturated monomers, said copolymers having a glass transition temperature in the range of 40°C to 90°C and a number average molecular weight of between about 2500 and about 8500 and (B) a carboxyl terminated crosslinking agent in the amount ranging from about 0.8 to about 1.2 carboxyl groups for each epoxy group in the copolymer.

US 5,525,370 A is concerned with a process for the preparation of a matte coating on an article, which comprises applying to said article a powdered thermosetting composition comprising as binder a mixture of a linear carboxyl group-containing polyester and a glycidyl group-containing acrylic copolymer and curing the thus coated article at a temperature of from 160°C to 210°C for a period of up to about 30 minutes.

US 2006/062908 A1 is directed to a method of forming a coating film on aluminum substrate comprising the steps of (1) coating an aluminum substrate with a thermosetting polyester resin lustrous powder base coating composition containing a lustrous material, and baking the resulting base coat layer; and (2) coating the base coat layer with a thermosetting acrylic resin clear powder coating composition, and baking the resulting clear coat layer to obtain a lustrous multilayer coating film.

There is a need to provide coatings based on a powder coating process that provides coatings having the desired special effect which meets the excellent surface effects resulted by the known anodizing process, and which fulfill the requirements of architectural coating applications such as high appearance and smoothness. Additionally, the desired properties should be provided by a one-layer coating of the powder coating composition.

### Summary of the Invention

The present invention provides a process of powder coating aluminium substrate surfaces with a one-layer coating comprising the steps
a) pre-treating the aluminium substrate surface by a color-less chemical treatment process which is a chrome-free surface treatment,
b) applying a clear powder coating composition based on at least one (meth)acrylic resin and at least one resin selected from the group consisting of polyester resin and polyurethane resin, providing a low gloss of the cured coating in the range of 1 to 20 gloss units at 60° angle according to DIN 67530 (ISO2813), and curing the coating composition.

The process according to the invention makes it possible to provide the desired special effect of the coated surface which meets the effect resulted using the anodizing process, hereinafter called as "anodizing effect".

A one-layer coating of the substrate is possible providing additionally a high appearance and smoothness of the cured coating, a strong adhesion to non-primered aluminium substrate surfaces as well as an excellent hardness, corrosion- resistance, weather resistance and light fastness of the cured coating.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges can be used to achieve substantially the same results as values within the ranges. Also, the disclosure of these ranges is intended as a continuous range including every value between the minimum and maximum values.

The process according to the invention provides coatings having a low gloss level in the range of 1 to 20, preferably in the range of 1 to 15 gloss units at 60° angle.

The gloss is measured at 60° angle according to DIN 67 530 (ISO2813). Typically, gloss can be adjusted in the range of 1 to 130 gloss units; typically a low gloss has a gloss in the range of 1 to 30 gloss units and a medium gloss finish in the range of 30 to 70 gloss units.

The process according to the invention provides coatings having a surface structure of the cured coating characterized by a value of Integral 1 in the range of higher than 8.00E+00, preferably in the range of 1.00E+01 to 1.40E+01, measured by the mechanical profilometry Fourier analysis.

The mechanical profilometry Fourier analysis according to this invention means a surface structure analysis using a Hommeltester (Hommel, Germany) known by a person skilled in the art, whereby the surface profiles have recorded over a scan length of 15 mm. The evaluation of mechanical profile measurements according to average roughness Ra value according to DIN EN 10049 gives an integrated information about the surface structure. The sample is moved by a precise positioning table for a small distance between two line scans. A cut off wavelength of 2.5mm for 15mm scan length is used to separate between roughness and waviness profile. The square of amplitudes (intensity, measured in µm²) of the calculated sine and cosine waves representing the surface profile is plotted versus the corresponding wave number (reciprocal wavelength). The Integral 1 is the sum of squares of the amplitudes in the wave length range from 1 to 10 mm.

The process according to the invention comprises as step a) pre-treating the aluminium substrate surface by a color-less chemical treatment process to protect the surface from corrosion and to have the surface to be free of grease or other contaminants. The chemical pretreatment process is a chrome-free surface treatment. All chrome free pretreatments known in the art that give a colorless surface can be used to match the desired anodizing effect. For example, the aluminium substrate surface is cleaned in the first stage, rinsed with water in the second stage and finally, in the third stage, wetted with an aqueous solution which forms chemical conversion coatings, the liquid film being
dried off. For example, such process can comprise the steps of a) rinsing the aluminium substrate surface with an aqueous, acidic solution containing a mineral acid, b) rinsing with water, c) bringing the surface into contact with an aqueous, acidic solution which is chromium-free and polymer-free. The solution of step c) may contain complex fluorides, e.g. titanium (Ti) and zirconium (Zr) complex fluorides, also mixtures thereof, in different concentrations and with different pH values. After the subsequent drying off, a layer weight of 2 to 15 mg/square meter (calculated as Ti/Zr metal) may result.

The process according to the invention comprises as step b) applying a clear powder coating composition based on at least one (meth) acrylic resin and at least one resin selected from the group consisting of polyester resin and polyurethane resin.

The term (meth) acrylic is respectively intended to mean acrylic and/or methacrylic.

Suitable (meth)acrylic resins are unsaturated resins, such as, e.g., copolymers prepared from alkyl(meth)acrylates with glycidyl(meth) acrylates and olefinic monomers; functionalized resins such as polyester (meth)acrylates, epoxy (meth)acrylates, urethane (meth)acrylates, glycidyl(meth)acrylates.

Preferably at least one glycidyl(meth)acrylic resin is used.

The glycidyl-functionalised (meth) acrylic resins have preferably an epoxide equivalent weight (EEW) in a range of 300 to 2000, preferred in a range of 400 to 700, epoxy equivalent weight determined by means of ADSAM142, a method code of the EEW test using auto-tritator (Brinkman Metrohm 751 GPD Titrino) and known by a person skilled in the art, and a glass transition temperature Tg in a range of, e.g., 30 to 80°C, preferably 40 to 70°C, Tg determined by means of differential scanning calorimetry (DSC).

Especially preferred for this invention are glycidyl functionalised (meth)acrylic resins with an EEW in the range of 400 to 700.

Examples of glycidyl-functionalised (meth)acrylic resins are glycidyl functionalised acrylic resins or copolymers therefrom, such as, for example, Isocryl® EP570 (Worlee Chemie GbmH), Almatex® PD 7610®, Almatex® PD 7890, Almatex® PD-1700, Almatex® PD-6190 (Anderson Development Co.), Synthacryl®700, Synthacryl®710 (Cytec Surface Specialties), FinePlus® AC2490, FinePlus AC2660 (DIC).

The (meth)acrylic resins have a glass transition temperature Tg preferably in a range of 40 to 70°C, Tg determined by means of differential scanning calorimetry (DSC).

The number average molar mass Mn of the (meth)acrylic resins is in the range of, e.g., 2000 to 15.000, Mn determined or to be determined by gel permeation chromatography (GPC; divinylbenzene-cross-linked polystyrene as the immobile phase, tetrahydrofuran as the liquid phase, polystyrene standards).

Crystalline and/or semicrystalline (meth)acrylic resins are also usable which have a Tm (melting temperature) preferably in the range of e.g., 50 to 150°C, determined by means of DSC.

The (meth)acrylic resins can comprise self cross-linkable resins containing cross-linkable functional groups known by a person skilled in the art. They can also be cross-linked by cross-linking agents suitable for (meth)acrylic resins known by a person skilled in the art. Example are cycloaliphatic, aliphatic or aromatic polyisoeyanates; cross-linking agents containing epoxy groups, such as, for example, triglycidyl isocyanurate (TGIC); polyglycidyl ethers based on diethylene glycol; glycidyl-functionalized (meth)acrylic copolymers; and cross-linking agents containing amino, amido, (meth)acrylate and/or hydroxyl groups, as well as vinyl ethers. Furthermore, conventionally cross-linking agents such as, dicyanodiamide hardeners, carboxylic acid hardeners or phenolic hardeners are usable. Preferred is the use of cross-linking agents containing amino, amido, and/or hydroxyl groups, in a range of, for example, 0.1 to 15 wt%, preferably 0.1 to 5 wt%, based on the total weight of the clear powder coating composition.

The clear powder coating compositions according to this invention may contain as further components the constituents conventional in powder coating technology, such as additives and fillers as known by a person skilled in the art. The constituents are used in conventional amounts known to the person skilled in the art, for example, 0.01 to 25 wt %, based on the total weight of the powder coating composition.

To cover all the nuances of the anodized effect the clear powder coating composition can be coloured by at least one pigment and/or dye. The at least one pigment and/or dye can be transparent and/or semitransparent which can be any conventional coating pigment and/or dye of an organic or inorganic nature known by a person skilled in the art, selected to provide, according to the process of the invention, coatings of the required gloss and surface structure measured by the mechanical profilometry Fourier analysis as well as a desired color of the coating.

The amount of the at least one pigment and/or dye depends on the type of pigment and/or dye and is in the range of, for example, 0 to 10 wt% based on the total powder coating composition.

Additives are, for example, degassing auxiliaries, flow-control agents, flatting agents, waxes, texturing agents, fillers (extenders), photoinitiators, catalysts and dyes. Compounds having anti-microbial activity may also be added to the powder coating compositions. Examples of usable extenders are silicon dioxide, aluminum silicate, barium sulfate, and calcium carbonate. It is also preferred to use filler-free powder coating compositions.

The crosslinking reaction may be additionally accelerated by the presence in the clear powder coating composition according to the invention of catalysts known from thermal crosslinking. Such catalysts are, for example, tin salts, phosphides, amines, amides and imidazole, They may be used, for example, in quantities of 0.02 to 3 wt%, based on the total weight of the powder coating composition.

The clear powder coating composition may contain photoinitiators in order to initiate the free-radical polymerization. Suitable photoinitiators include, for example, those which absorb in the wavelength range from 190 to 600 nm. Examples for photoinitiators for free-radically curing systems are benzoin and derivatives, acetophenone and derivatives, benzophenone and derivatives, thioxanthone and derivatives, anthraquinone, organo phosphorus compounds, such as, for example, acyl phosphine oxides. The photoinitiators are used, for example, in quantities of 0 to 7 wt%, based on the total weight of the powder coating composition.

In a first embodiment a clear powder coating composition can be used comprising a combination of at least one polyester resin and at least one (meth) acrylic resin. The at least one polyester resin and the at least one (meth) acrylic resin can be used in a ratio of 4 : 1 to 1 : 3, preferred 3.5 : 1 to 2 : 2.

Suitable (meth)acrylic resins are those as described above.

Suitable polyesters are saturated and unsaturated polyesters. They may be produced in a conventional manner by reacting polycarboxylic acids, and the anhydrides and/or esters thereof with polyalcohols, as is, for example, described in D.A. Bates, The Science of Powder Coatings, volumes 1 & 2, Gardiner House, London, 1990. Unsaturated polyesters can be crosslinked by free-radical polymerization and can be prepolymers, such as, polymers and oligomers, containing, per molecule, one or more, free-radically polymerizable olefinic double bonds.

Examples of suitable polycarboxylic acids, and the anhydrides and/or esters thereof include maleic acid, fumaric acid, malonic acid, adipic acid, 1.4-cyclohexane dicarboxylic add, isophthalic acid, terephthalic acid, acrylic acid, and their anhydride form, or mixtures thereof. Examples of suitable alcohols are benzyl alcohol, butanediol, hexanediol, diethylene glycol, pentaerytritol, neopentyl glycol, propylene glycol, and mixtures thereof.

Mixtures of carboxyl and hydroxyl group containing polyesters may be used. The carboxy-functionalized polyesters according to the invention have an acid value of 10 to 100 mg of KOH/g of resin, preferred 10 to 50 mg of KOH/g of resin and the hydroxy-functionalized polyesters have an OH value of 10 to 400 mg of KOH/g of resin, preferred 20 to 100 mg of KOH/g of resin.

Preferred is the use of carboxy-functionalized polyesters.

The polyesters have a glass transition temperature Tg preferably in a range of, e.g., 35 to 70°C, Tg determined by means of differential scanning calorimetry (DSC).

The number average molar mass Mn of the polyesters is preferably in the range of, e.g., 2000 to 10,000, Mn determined or to be determined by gel permeation chromatography (GPC; divinylbenzene-cross-linked polystyrene as the immobile phase, tetrahydrofuran as the liquid phase, polystyrene standards).

Crystalline and/or semicrystalline polyesters are also usable which have a Tm (melting temperature) preferably in the range of e.g., 50 to 150°C(to check), determined by means of DSC.

The polyesters can comprise self cross-linkable resins containing cross-linkable functional groups known by a person skilled in the art. They can also be cross-linked by cross-linking agents suitable for polyesters known by a person skilled in the art. Example are cycloaliphatic, aliphatic or aromatic polyisocyanates; cross-linking agents containing epoxy groups, such as, for example, triglycidyl isocyanurate (TGIC); polyglycidyl ethers based on diethylene glycol; glycidyl-functionalized (meth)acrylic copolymers; and cross-linking agents containing amino, amido, (meth)acrylate and/or hydroxyl groups, as well as vinyl ethers. Furthermore, conventionally cross-linking agents such as, dicyanodiamide hardeners, carboxylic acid hardeners or phenolic hardeners are usable. Preferred is the use of cross-linking agents containing amino, amido, and/or hydroxyl groups, in a range of, for example, 0.5 to 15 wt%, based on the total weight of the clear powder coating composition.

In a second embodiment a clear powder coating composition can be used comprising a combination of at least one polyester resin and at least one (meth) acrylate resin as well as a specific kind of at least one pigment and/or dye providing the above mentioned anodizing effect.

Suitable (meth)acrylic resins are those as described above.

Suitable polyesters are saturated and unsaturated polyesters as described above for the first embodiment.

The at least one polyester resin and the at least one (meth) acrylic resin can be used in a ratio as described for the first embodiment.

The powder coating composition of the second embodiment may comprise 0.1 to 10 wt%, preferably 0.1 to 5 wt% and most preferably 0.1 to 3 wt%, based on the total powder coating composition, of at least one pigment and/or dye. The at least one pigment and/or dye can be transparent and/or semitransparent which can be any conventional coating pigment and/or dye of an organic or inorganic nature known by a person skilled in the art, selected to provide, according to the process of the invention, coatings of the required gloss and surface structure measured by the mechanical profilometry Fourier analysis as well as a desired color of the coating.

Examples of transparent and semitransparent pigments and/or dyes are iron oxide pigments like Sicotrans® (BASF) pigments, dyes based on metallic complex, for example NEOZAPON® (BASF), ORASOL® (Ciba), Nymco® (Heubach), Savinyl® (Clariant), micronized titanium dioxide, carbon black.

Portions of color-imparting pigments and/or dyes can be used in addition to the transparent and/or semitransparent pigments and/or dyes, in amounts in the range of, for example, 0.01 to 5 wt% based on the total powder coating composition. Examples of color-imparting pigments are metallic pigments, for example, leafing and non-leafing metallic pigments based on silver, copper, aluminum, inorganic and/or organic coated and/or encapsulated aluminum flakes and/or particles, and/or micas, inorganic and/or organic chromatic pigments can be used. Leafing pigments orientate parallely to the surface of the coating film and non-leafing pigments are intimately bonded with the paint matrix.

For example, a clear powder coating composition can be used comprising
(A) 60 to 99 wt% of a mixture comprising at least one polyester resin and at least one (meth) acrylate resin,
(B) 0 to 30 wt% of at least one cross-linking agent,
(C) 0 to 10 wt%, preferably 0.1 to 10 wt%, of at least one pigment and/or dye,
providing a low gloss of the cured coating in the range of 1 to 20 gloss units at 60° angle according to DIN 67530 (ISO2813) as well as a surface structure of the cured coating characterized by a value of Integral 1 in the range of higher than 8.00E+00, preferably in the range of 1.00E+01 to 1.40E+01, measured by the mechanical profilometry Fourier analysis, and whereby the wt% are based on the total weight of the powder coating composition.

In a third embodiment a clear powder coating composition can be used comprising a combination of at least one polyurethane resin and at least one (meth) acrylic resin. The at least one polyurethane resin and the at least one (meth) acrylic resin can be used in a ratio of 4 : 1 to 1 : 3, preferably 3.5 ; 1 to 2 : 2.

Suitable (meth)acrylic resins are those as described above.

As polyurethane resin preferably at least one carboxyl functionalised polyurethane resin is usable, for example with quantities in the range of 30 to 90 wt%, preferred 40 to 70 wt%, based on the total powder coating composition. These are carboxyl functionalised polyurethane resins which are preferably solid at room temperature.

The carboxyl functionalised polyurethane resins may be produced by, for example, reacting hydroxyl functionalised polyurethanes with acid anhydrides. Furthermore, the carboxyl functionalised polyurethane resins may be produced by reacting diisocyanates or polyisocynates or isocyanate functionalised pre-polymers with hydroxyl carboxyl acids,

The hydroxyl functionalised polyurethanes may be prepared in a conventional manner as known to the person skilled in the art, in particular, by reacting polyisocyanates with polyols in the excess. Polyols suitable for the production of the polyurethanes are not only polyols in the form of low molar mass compounds defined by empirical and structural formulas but also oligomeric or polymeric polyols with number-average molar masses of, for example, up to 800, for example, corresponding hydroxyl-functional polyethers, polyesters or polycarbonates; low molar mass polyols defined by an empirical and structural formula are, however, preferred. Examples of useful polyols are the following diols: ethylene glycol, the isomeric propane- and butanediols, 1,5-pentanediol, 1,6-hexanediol, 1,10-decanediol, 1,12-,dodecanediol, neopentyl glycol, butylethylpropanediol, the isomeric cyclohexanediols, the isomeric cyclohexanedimethanols, hydrogenated bisphenol A, tricyclodecanedimethanol, and dimer fatty alcohol as representatives of (cyclo)aliphatic diols defined by empirical and structural formula with a low molar mass in the range of 62 to 600 as well as telechelic (meth)acrylic polymer diols, polyester diols, polyether diols, polycarbonate diols, each with a number-average molar mass of, for example, up to 800 as representatives of oligomeric or polymeric diols. Further examples of polyols are polyesterpolyols, polycarbonatepolyols, polyetherpolyols, polylactone-polyols and/or poly(meth)acrylatepolyols. Examples of acid anhydrides are anhydrides of maleic acid, succinic acid, tetrahydro phthalic acid, hexahydro phthalic acid, methyl hexahydro phthalic acid, trimellitic acid, of pyromellitic acid, and citric acid.

Examples of diisocyanates are hexamethylene diisocyanate (HDI), tetramethylxylylene diisocyanate, isophorone diisocyanate, dicyclohexylmethane diisocyanate, cyclohexane diisocyanate, toluylene diisocyanate, and diphenylmethane diisocyanate.

Examples of polyisocyanates are those which contain heteroatoms in the residue linking the isocyanate groups. Examples of these are polyisocyanates which comprise carbodiimide groups, allophanate groups, isocyanurate groups, urethane groups, acylated urea groups or biuret groups. The polyisocyanates have an isocyanate functionality higher than 2, such as, for example, polyisocyanates of the uretidione or isocyanurate type produced by di- and/or trimerization of the diisocyanates stated in the above paragraph. Further examples are polyisocyanates containing biuret groups produced by reaction of the diisocyanates stated in the above paragraph with water. Further examples are likewise polyisocyanates containing urethane groups produced by reaction with polyols.

Polyisocyanate crosslinking agents known for isocyanate-curing coating systems and based on hexamethylene diisocyanate, on isophorone diisocyanate and/or on dicyclohexylmethane diisocyanate are very highly suitable as polyisocyanates. Examples are the per se known derivatives of these diisocyanates comprising biuret, urethane, uretidione and/or isocyanurate groups. Examples thereof may be found among the products known by the name Desmodur® sold by Bayer Material Science.

Examples of hydroxy carboxylic acids are hxdroxy succinic acid, 12-hydroxy stearic acid or adducts from monoepoxides and dicarboxylic acids.

The carboxyl-functional polyurethane resin may be produced in the presence of organic solvents, which, however, makes it necessary to isolate the polyurethane resin obtained in this manner or remove the solvent therefrom. Preferably, the production of the polyurethane resin is, however, carried out without solvent and without subsequent purification operations.

The carboxyl-functional polyurethane resins of component have an acid value in the range of 50 to 300, preferably of 80 to 200.

The acid value is defined as the number of mg of potassium hydroxide (KOH) required to neutralise the carboxylic groups of 1 g of the resin.

The person skilled in the art selects the nature and proportion of the polyisocyanates and polyols for the production of polyurethane resins in such a manner that polyurethane resins are obtained which are solid at room temperature.

In a fourth embodiment a clear powder coating composition can be used comprising a combination of at least one polyurethane resin and at least one (meth) acrylic resin as well as a specific kind of at least one pigment.

The at least one polyurethane resin and the at least one (meth) acrylic resin can be used in a ratio as described for the third embodiment.

Suitable (meth)acrylic resins are those as described above.

Suitable polyurethane resins are those as described above.

The powder coating composition of the fourth embodiment may comprise 0.1 to 10 wt%, preferably 0.1 to 5 wt% and most preferably 0.1 to 3 wt%, based on the total powder coating composition, of at least one pigment and/or dye. The at least one pigment and/or dye can be a transparent and/or semitransparent pigment and/or dye which can be any conventional coating pigment and/or dye of an organic or inorganic nature known by a person skilled in the art, selected to provide, by the process according to the invention, coatings of the required gloss and surface structure measured by the mechanical profilometry Fourier analysis as well as a desired color of the coating.

Suitable pigments and dyes are those as described above for the second embodiment.

For example, a clear powder coating composition can be used comprising
A) 30 to 90 wt% of at least one glycidyl-functionalised (meth)acrylic resin,
B) 30 to 90 wt% of at least one carboxyl functionalised polyurethane resin,
C) 0 to 10 wt% of at least one cross-linking agent, and
D) 0,05 to 30 wt% of at least one coating additive, pigment and/or dye and/or filler, comprising 0 to 10 wt%, preferably 0.1 to 10 wt% of at least one pigment and/or dye,
providing a low gloss of the cured coating in the range of 1 to 20 gloss units at 80° angle according to DIN 67530 (ISO2S13) as well as a surface structure of the cured coating characterized by a value of Integral 1 in the range of higher than 8.00E+00, preferably in the range of 1.00E+01 to 1.40E+01, measured by the mechanical profilometry Fourier analysis, and whereby the wt% are based on the total weight of the powder coating composition.

The cross-linking agent can be the same as described for the first embodiment, for example, cross-linking agents containing epoxy groups, such as, for example, triglycidyl isocyanurate (TGIC); polyglycidyl ethers based on diethylene glycol; glycidyl-functionalized (meth)acrylic copolymers; and cross-linking agents containing amino, amido, (meth)acrylate and/or hydroxyl groups, as well as vinyl ethers. Furthermore, conventionally cross-linking agents such as, dicyanodiamide hardeners, carboxylic acid hardeners or phenolic hardeners are usable. Preferred is the use of cross-linking agents containing amino, amido, and/or hydroxyl groups, in a range of, for example, 0.5 to 10 wt%, based on the total weight of the clear powder coating composition.

The clear powder coating composition according to the process of the invention may be prepared by conventional manufacturing techniques used in the powder coating industry, such as, extrusion and/or grinding processes.

For example, the components used in the powder coating composition, can be blended together with the pigments and/or dyes and then heated to a temperature to melt the mixture and then the mixture is extruded. The extruded material is then cooled on chill roles, broken up and then ground to a fine powder, which can be classified to the desired grain size, for example, to an average particle size of 20 to 200 µm.

The powder coating compositions may also be prepared by spraying from supercritical solutions, NAD "non-aqueous dispersion" processes or ultrasonic standing wave atomization process.

Alternatively, the ingredients of the powder coating composition according to the invention may also be processed first without the pigments and/or dyes. In such cases the pigments and/or dyes may be processed with the finished powder coating particles.

For example, the pigments and/or dyes, particularly the pigments, may be processed after extrusion and grinding of the ingredients of the powder coating composition by dry-blending the pigments and/or dyes with the finished powder coating particles.

Furthermore, the pigments and/or dyes, particularly the pigments, may be processed with the finished powder coating particles after extrusion and grinding by the so-called "bonding" process. Particularly, this means, that the pigments are bonded with the powder coating particles using an impact fusion. For this purpose, the pigments may be mixed with the powder coating particles. During blending, the individual powder coating particles are treated to softening their surface so that the pigments adhere to them and are homogeneously bonded with the surface of the powder coating particles. The softening of the powder particles surface may be done by heat treating the particles to a temperature, e.g., the glass transition temperature Tg of the composition, in a range, of e.g., 40 to 70°C. After cooling the mixture may be sieved to receive the desired particle size of the resulted particles.

Therefore the invention also relates to a process for preparation of a powder coating composition.

The powder coating composition of this invention may be applied by, e.g., electrostatic spraying, thermal or flame spraying, or fluidized bed coating methods, all of which are known to those skilled in the art.

The coating compositions may be applied to all kind of aluminium substrates, e.g., aluminium sheets, coils, profiles, alloys, window frames.

The powder coating composition according to the invention may be used for high speed coating on aluminium, for example, via coil coating processes at coating speeds of, for example, about > 30 m/min, for example, in the range of 30 to 50 m/min.

In certain applications, the substrate to be coated may be preheated before the application of the powder composition, and then either heated after the application of the powder or not. For example, gas is commonly used for various heating steps, but other methods, e.g., microwaves, infra red (IR) and/or near infra red (NIR) irradiation are also known.

The process according to the invention makes it possible to apply the coating composition directly on the aluminum substrate surface as a one-coating system providing the abovementioned benefits of this invention.

The applied and melted powder coating layer can be cured by thermal energy. The coating layer may, for example, be exposed by convective, gas and/or radiant heating, e.g., IR and/or NIR irradiation, as known in the art, to temperatures of, e.g., 80°C to 220°C, preferably of 120°C to 200°C (object temperature in each case).

The powder coating composition can also be cured by high energy radiation known by a skilled person. UV (ultraviolet) radiation or electron beam radiation may be used as high-energy radiation, UV-radiation is preferred. Irradiation may proceed continuously or discontinuously.

Dual curing may also be used. Dual curing means a curing method of the powder coating composition according to the invention where the applied composition can be cured, e.g., both by UV irradiation and by thermal curing methods known by a skilled person.

The invention therefore also relates to an article produced by the process according to the invention.

The present invention is further defined in the following Examples. It should be understood that these Examples are given by way of illustration only.

### Examples

### Example 1

### Manufacture of Powder Coating Compositions and Application

Powder coating compositions are prepared according to the following

**Formulation 1 and 2:**

| **Components** | **Formulation 1** Weight Percent (wt%) | **Formulation 2** Weight percent (wt%) |
|---|---|---|
| Unsaturated polyester resin (Acid value 25-35 mgKOH/g, Tg 58-65°C) | 70,8 | 65,1 |
| Glycidyl functionalized acrylic resin (epoxy equivalent weight 550-680 g/eq) | 25,8 | 33,1 |
| Crosslinker hydroxyalkylamide | 2,1 | 0 |
| F low control agent | 1,0 | 1,0 |
| Degassing agent | 0,3 | 0,3 |
| Metal complex dye | - | 0,5 |

The ingredients of each formulation are mixed together and extruded in an extruder PR 46 (firm: Buss AG) at 120°C The melt mixed formulation is cooled and the resulted material of each formulation is grinded and sieved to a D50 value of 30-40 µm particle size distribution.

Aluminum profiles are treated chemically by a chrome-free surface process with Alodine® 4870 (Henkel). The resulting color is almost colorless to a grey shade.

Formulation 1 and Formulation 2 are applied on treated aluminum profiles using a corona gun (firm: ITW Gema) as a one-layer coating to a film thickness around 80 µm. Finally each coating is cured in a convection oven at 200°C for 20 minutes.

### Example 2

### Test of the Cured Coatings

**Table 1: Results of the cured coatings according to the invention**

| **Test** | **Values** **Formulation 1** | **Values** **Formulation 2** |
|---|---|---|
| Gloss (at 60° angle according to ISO 2813) | 8 | 12 |
| Adhesion | Gt 0 | Gt 0 |
| Bend Test (EN ISO 1519), 5 mm mandrel | Pass | Pass |
| Impact test | >2,5 Nm | >2,5 Nm |
| Accelerated Weathering test (500h QUV-B 313nm) | Gloss retention > 50% DE < 1,5 | Gloss retention > 50% DE < 1,5 |
| Surface Structure (Integral 1 measured by the mechanical profilometry Fourier analysis) | 1.00E+01 (wavelength range 1-10 mm) | 1.30E+01 (wavelength range 1-10 mm) |

The combination of the colorless pretreatment and the matt clear powder coating composition results in the final anodized effect.

## Claims

1. A process of powder coating aluminium substrate surfaces with a one-layer coating comprising the steps
a) pre-treating the aluminium substrate surface by a color-less chemical treatment process which is a chrome-free surface treatment,
b) applying a clear powder coating composition based on at least one (meth)acrylic resin and at least one resin selected from the group consisting of polyester resin and polyurethane resin, providing a low gloss of the cured coating in the range of 1 to 20 gloss units at 60° angle, determined according to DIN 67530 (ISO 2813), and curing the coating composition.

2. The process according to claim 1 wherein a clear powder coating composition is applied providing a low gloss of the cured coating in the range of 1 to 15 gloss units at 60° angle, determined according to DIN 67530 (ISO 2813).

3. The process according to claims 1 or 2 wherein a clear powder coating composition is applied comprising a combination of at least one polyester resin and at least one (meth) acrylic resin in a ratio of 4 : 1 to 1 : 3.

4. The process according to claims 1 or 2 wherein a clear powder coating composition is applied comprising at least one polyurethane resin and at least one (meth) acrylic resin in a ratio of 4 : 1 to 1 : 3.

5. The process according to claims 1 to 4 wherein a clear powder coating composition is applied comprising at least one glycidyl (meth) acrylic resin as the (meth) acrylic resin with an epoxide equivalent weight EEW in the range of 400 to 700 and a glass transition temperature Tg in a range of 40 to 70°C.

6. An article produced by the process according to claims 1 to 5.

## Patentansprüche

1. Verfahren des Pulverbeschichtens von Aluminiumsubstratoberflächen mit einer Einschichtbeschichtung, umfassend die Schritte:
a) Vorbehandeln der Aluminiumsubstratoberfläche durch ein Behandlungsverfahren mit farbloser Chemikalie, das eine chromfreie Oberflächenbehandlung ist,
b) Aufbringen einer klaren Pulverbeschichtungszusammensetzung auf Basis mindestens eines (Meth)acrylharzes und mindestens eines Harzes, ausgewählt aus der Gruppe, bestehend aus Polyesterharz und Polyurethanharz, Versehen der ausgehärteten Beschichtung mit einem geringen Glanz in dem Bereich von 1 bis 20 Glanzeinheiten unter einem 60°-Winkel, bestimmt nach DIN 67530 (ISO 2813), und Aushärten der Beschichtungszusammensetzung.

2. Verfahren nach Anspruch 1, wobei eine klare Pulverbeschichtungszusammensetzung aufgebracht wird, welche die ausgehärtete Beschichtung mit einem geringen Glanz in dem Bereich von 1 bis 15 Glanzeinheiten unter einem 60°-Winkel, bestimmt nach DIN 67530 (ISO 2813), versieht.

3. Verfahren nach Anspruch 1 oder 2, wobei eine klare Pulverbeschichtungszusammensetzung aufgebracht wird, die eine Kombination aus mindestens einem Polyesterharz und mindestens einem (Meth)acrylharz in einem Verhältnis von 4 : 1 bis 1 : 3 umfasst.

4. Verfahren nach Anspruch 1 oder 2, wobei eine klare Pulverbeschichtungszusammensetzung aufgebracht wird, die mindestens ein Polyurethanharz und mindestens ein (Meth)acrylharz in einem Verhältnis von 4 : 1 bis 1 : 3 umfasst.

5. Verfahren nach Anspruch 1 bis 4, wobei eine klare Pulverbeschichtungszusammensetzung aufgebracht wird, die mindestens ein Glycidyl(meth)acrylharz als das (Meth)acrylharz mit einem Epoxidäquivalentgewicht EÄG in dem Bereich von 400 bis 700 und einer Glasübergangstemperatur Tg in einem Bereich von 40 bis 70 °C umfasst.

6. Gegenstand, hergestellt durch das Verfahren nach Anspruch 1 bis 5.

## Revendications

1. Procédé de revêtement par poudre des surfaces d'un substrat en aluminium avec un revêtement monocouche comprenant les étapes de
a) pré-traitement de la surface du substrat en aluminium par un procédé de traitement chimique incolore qui est un traitement de surface exempt de chrome,
b) application d'une composition de revêtement en poudre transparente basée sur au moins une résine (méth)acrylique et au moins une résine sélectionnée dans le groupe constitué par une résine de polyester et une résine de polyuréthane, fournissant une faible brillance du revêtement durci dans la plage de 1 à 20 unités de brillance selon un angle de 60°, déterminée selon la norme DIN 67530 (ISO 2813) et durcissement de la composition de revêtement.

2. Procédé selon la revendication 1, dans lequel une composition de revêtement en poudre transparente est appliquée pour fournir une faible brillance du revêtement durci dans la plage de 1 à 15 unités de brillance selon un angle de 60°, déterminée selon la norme DIN 67530 (ISO 2813).

3. Procédé selon la revendication 1 ou 2, dans lequel une composition de revêtement en poudre transparente est appliquée pour comprendre une combinaison d'au moins une résine de polyester et d'au moins une résine (méth)acrylique selon un rapport de 4 : 1 à 1 : 3.

4. Procédé selon la revendication 1 ou 2, dans lequel une composition de revêtement en poudre transparente est appliquée pour comprendre une combinaison d'au moins une résine de polyuréthane et d'au moins une résine (méth) acrylique selon un rapport de 4 : 1 à 1 : 3.

5. Procédé selon les revendications 1 à 4, dans lequel une composition de revêtement en poudre transparente est appliquée pour comprendre au moins une résine (méth)acrylique glycidylique en tant que résine (méth)acrylique avec un poids équivalent d'époxyde (EEW) compris dans la plage allant de 400 à 700 et une température de transition vitreuse Tg comprise dans la plage allant de 40 à 70 °C.

6. Article produit par le procédé selon les revendications 1 à 5.
